# EUROPEAN PATENT SPECIFICATION

(11) **EP 0 586 776 B1**
(45) Date of publication and mention of the grant of the patent: **20.12.1995**
(21) Application number: 92850214.5
(22) Date of filing: 09.09.1992
(51) Int. Cl.: F16C 33/64

(54) **A method of manufacturing a double row angular contact ball bearing**
Verfahren zur Herstellung eines doppelreihigen Schrägkugellagers
Procédé de fabrication d'un roulement à double rangée de filles à contact oblique

(43) Date of publication of application: 16.03.1994
(73) Proprietor: SKF Nova AB, S-415 50 Göteborg (SE)
(72) Inventor: Andersson, Börje, S-431 39 Mölndal (SE)
(74) Representative: Westman, P. Börje I.

(56) References cited:
- EP-A- 0 328 496
- DE-C- 821 887
- FR-A- 1 600 856
- GB-A- 1 027 274
- US-A- 3 300 261

## Description

The present invention refers to a method of manufacturing a double row angular contact ball bearing having an outer race ring and an inner race ring and a number of balls arranged between said outer and inner race rings in two axially spaced apart rows, said race rings being made from tubular sheet metal material.

Ball bearings with race rings of sheet metal material are earlier known in various designs. Such bearings are simple and inexpensive and can be used in applications having not too high requirements for carrying capacity, speed and precision. Such bearings are usually manufactured in that the outer race ring and the inner race ring are shaped separately to final form by pressing or the like, whereupon the rings are assembled in common manner by insertion of balls therebetween. For manufacturing reasons such bearings earlier usually have been made as single row bearings, although there is also known double row bearings of this type. As shown in US-A-3,732,606, such older double row bearings often have had a split outer race ring, which facilitates the assembly of the bearing. DE-C-25 18 129 furthermore describes a double row angular contact ball bearing, wherein the race rings may be adjusted angularly relative to each other.

Most sheet metal bearings are manufactured in that the separate rings are pressed or rolled in a tool, but they may also be shaped simultaneously during the very assembly operation. US-A-3,657,781 shows such shaping of the two rings for a single row deep groove ball bearing, where two annular work pieces are shaped by contact only with a tool and with the balls, which last mentioned, during the shaping operation, are held in position by means of the tool. However, this method is both complicated and expensive, and it is limited to manufacture of single row ball bearings.

It has been a desire to be able to manufacture also double row angular contact ball bearings from sheet metal material in an inexpensive and simple manner, thereby obtaining a bearing of high quality, and where the bearing clearance, i.e. the internal clearance between balls and race rings, can be adjusted in a simple manner.

EP-A2-0 328 496 describes double row angular contact ball bearings of this type and also some methods for manufacturing such inexpensive, simple and yet reliable bearings in a simple manner. According to one embodiment in this publication the outer race ring is first shaped to finished, e.g. by rolling or pressing, whereupon the unfinished inner ring is arranged coaxially inside the outer ring. The two rows of balls thereupon are inserted between the two rings and the unfinished inner ring is finally shaped by bending in that the inner ring is caused to rotate in a tool which exerts an axial/radial pressure against the ends of the inner race ring, to effect the rows of balls to roll constantly. The balls hereby will be permanently encapsulated in two rows, whereby the balls serve as the only counterholds during the shaping operation. In order to obtain a desired zero-play in the bearing it is specified that the pressure applied by the tool on the portions to be bent shall be carefully adapted, but this makes it difficult to obtain the same desired play and preload in every bearing, due to small dimensional differences, etcetera.

The purpose of the present invention is to provide a method, which in a simple and efficient manner solves this problem, and provides a possibility to obtain a predetermined and equal preload and play in every bearing manufactured, and which preload furthermore can be adjusted to the desired amount, and this has been obtained with a method incorporating the following steps:
a) providing a first tubular sheet metal work piece to form a finished outer race ring having a pair of axially spaced finished outer raceways formed in the inner surface of the work piece adjacent its opposite axial ends;
b) providing a second tubular sheet metal work piece concentrically aligned with the the outer race ring to form a rotatable unfinished inner race ring having a pair of axially spaced unfinished inner race ways formed in the outer envelope surface thereof adjacent opposite axial ends thereof;
c) introducing two rows of balls between the finished outer race ring and the unfinished inner race ring;
d) providing two rotatable forming members inserted at opposite axial ends of the unfinished inner race ring;
e) preventing rotation of the outer race ring below an adjustable but predetermined torque;
f) rotating the unfinished inner race ring and the forming members to make the rows of balls roll constantly about the circumferential periphery of the inner race ring;
g) bending the unfinished inner ring outwardly of the two rows of balls by the rotatable forming members to shape the unfinished inner raceways to a final, finished form, until the balls are permanently encapsulated in two rows forming a bearing free from play, whereby the finished outer race ring is caused to start to rotate, together with the inner race ring; and
h) using the start of rotation of the outer race ring as an indication that the formation of the bearing is completed.

The invention hereinafter will be further described with reference to the accompanying drawings, wherein:
Fig. 1 is a front view of a two row angular contact ball bearing assembled in accordance with the method according to the invention, and with a portion broken away for showing the interior thereof.
Fig. 2 is an end view of the bearing shown in Fig. 1.
Fig. 3 is a fragmentary section showing schematically the first step in the assembly of the bearing shown in Fig. 1.
Fig. 4 is a view similar to Fig. 3 showing the second step in the assembly.
Fig. 5 shows in a view similar to Fig. 3 and Fig. 4 the third step in the assembly.
Fig. 6 is a fragmentary view taken on line VI-VI in Fig. 5, and
Fig. 7 is a view similar to Fig.s 3-5 showing the fourth and final step in assembly.

Fig.s 1 and 2 show schematically a double row, angular contact ball bearing having an inner race ring 11, an outer race ring 10 and two rows of balls 12 disposed between the race rings. The outer race ring 10 is provided with a circumferential depression 10a between the rows of balls, but is otherwise cylindrical. The inner race ring 11 is cylindrical but has circumferential, radially outwardly extending end portions 13 at its axial ends. The spaces formed by the circumferential depression 10a and the axial end portions 13 form together a raceway for each row of balls 12. Thus it is obtained a double row, angular contact ball bearing, having no ball retainer, the bearing instead being equipped with a maximum number of balls. The invention is not limited to such bearings but can be used also at bearings having a smaller number of retainer-guided balls.

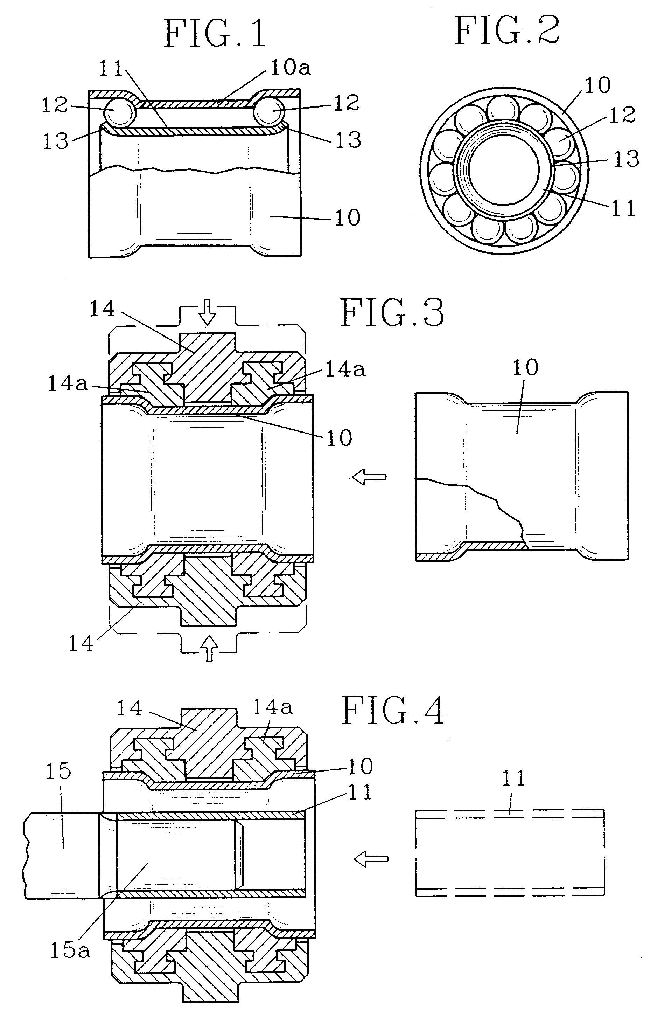

Fig. 3 illustrates schematically the first step in manufacturing a double row, angular contact ball bearing according to the present invention. As illustrated therein, a finished outer race ring 10 is inserted in a suitable manner axially into assembly position in the support of an assembly machine or the like, having clamping jaws 14 arranged to grip the outer race ring 10, when this is inserted therein and to hold it clamped with an adjustable clamping force.

In the embodiment shown in Fig.s 3-6, the jaws 14 are two semi-circular members, each having contact elements 14a, adapted to correspond to the curvature of the outer race ring and arranged to prevent the outer race ring from rotation, when the clamping jaws 14 are clamped about the outer race ring 10. By suitable choice of material and size of the contact elements 14a and the size of the clamping force it is possible to determine in an accurate manner, when the outer race ring, thus clamped between the clamping jaws 14, shall begin to rotate, as the outer race ring is subjected to a torque.

In the second step of manufacture, illustrated in Fig. 4, a tubular member 11 is inserted axially into the outer race ring 10 to a position concentrically aligned with the outer race ring 10. This is achieved with a first forming member, in the embodiment shown shaped as a mandrel 15 entering the tubular member 11.

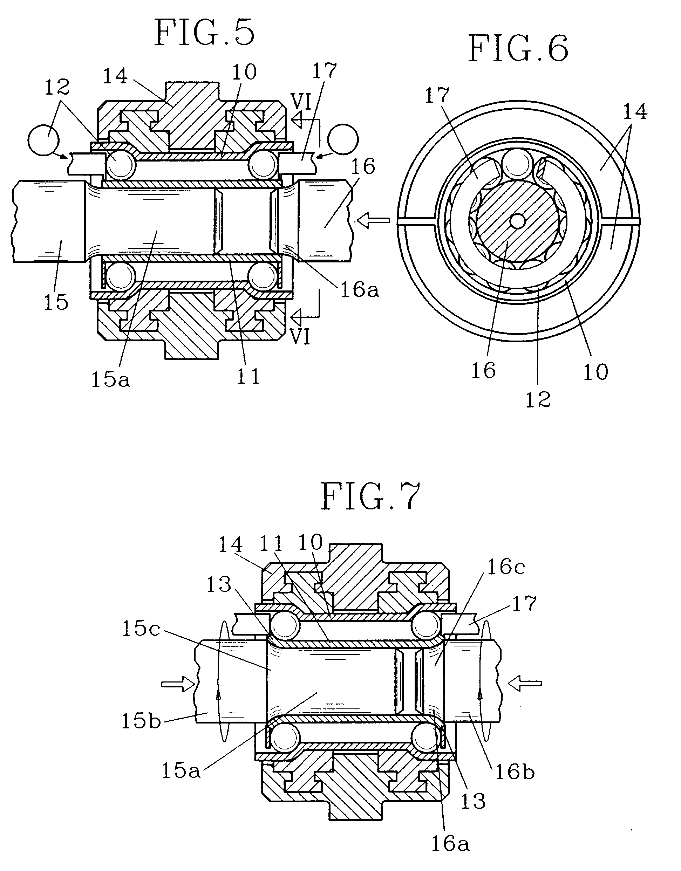

Balls 12 then are inserted in the annular space between the rings 10, 11 from both axial ends, as can be seen in Fig. 5. A second forming member, in this embodiment shaped as a further mandrel 16 is advanced from the side of the inner ring opposed to the one from which the first mandrel 15 is introduced in the inner ring, until this second mandrel 16 is in contact with the end face of the inner ring. The introduction of the balls 12 in the annular spaces can preferably by made with aid of a tool 17 schematically shown in Fig.s 5-7.

In the final step of the shaping operation, as can be seen in Fig. 7 the two forming members or mandrels 15, 16 are caused to rotate. Thereby the inner ring 11 starts to rotate, whereupon both mandrels 15,16, during continued rotation, are caused to press axially towards the inner ring. Each mandrel has an end portion 15a, 16a resp., of a diameter sub-stantially corresponding to the internal diameter of the inner ring. Said end portion 15a of the first mandrel 15, which also serves to position the inner ring 11 concentrically in the outer ring 10, is rather long, whereas the opposite mandrel 16 can have a rather short end portion 16a. Both mandrels have an outer portion 15b, 16b resp. with diameter bigger than the internal diameter of the inner ring 11, the transitory portion 15c, 16c betweeen these two portions of different diameter being curved.

During rotation the forming members or mandrels 15, 16 thus are pressed with their curved transitory portions 15c, 16c against opposed ends 13 of the inner ring, thereby bending both ends radially outwards. The rotation causes the balls 12 to roll against the raceways and during this rotation the outer race ring is held in position and being prevented from rotating by the clamping jaws 14. During bending of the ends 13 of the inner race ring an in-creasing preload is built up in the bearing. When the inner ring ends 13 have been bent to a pre-determined degree, this preload causes transfer of a torque from the rotated inner race ring to the outer race ring via the balls. The torque acting on the outer ring via the rotating balls thereby will overcome the clamping force, by which the contact elements 14a of the clamping members 14 hold the outer race ring, and hereby the outer race ring begins to rotate. This start of rotation is an indication that the desired preload in the bearing has been achieved and the force pressing the mandrels 15, 16 axially against the inner ring is relieved. The inner ring 11 then has been shaped to desired form where the rows of balls 12 are en-capsulated between the outer race ring 10 and the inner race ring 11. The rotation of the mandrels 15, 16 and of the inner race ring 11 is terminated, the mandrels 15, 16 are retracted and the clamping jaws 14 are opened to the position shown in dash-and-dot lines in Fig. 3, whereupon the completed double row angular contact ball bearing shown in Fig.s 1 and 2 and having race rings manufactured from sheet metal material, can be removed from the assembly machine.

By repeatedly giving the clamping jaws 14 the same clamping forces it is possible to produce bearings having the same internal play and preload in a very simple and reliable manner, and the start of the rotation of the outer race ring during the assembly, can be used as an impulse for relieving the pressure on the mandrels, thereby obtaining a high degree of automatization of the assembly. The fact that the preload of the formed bearing is used in this manner for determining when the formation of the bearing is completed means that small dimensional differencies between components of the bearings will not cause problems, with finished bearings having different internal clearance and preload.

The invention is not limited to the embodiment shown in the drawings and described with reference thereto but a plurality of modifications are possible within the scope of the accompanying claims. Thus the clamping jaws 14 which are shown in Fig. 6 as two semi-circular members, may of course be designed in other manners, and the exact design of the two forming members or mandrels 15, 16 may also differ from what is shown and described hereinbefore.

## Claims

1. A method of manufacturing a double row angular contact ball bearing having an outer race ring (10) and an inner race ring (11) and a number of balls (12) arranged between said outer and inner race rings in two axially spaced apart rows, said race rings being made from tubular sheet metal work pieces,
said method incorporating the steps of:
a) providing a first tubular sheet metal work piece to form a finished outer race ring (10) having a pair of axially spaced finished outer raceways formed in the inner surface of the work piece adjacent its opposite axial ends;
b) providing a second tubular sheet metal work piece concentrically aligned with the the outer race ring (10) to form a rotatable unfinished inner race ring (11) having a pair of axially spaced unfinished inner race ways formed in the outer envelope surface thereof adjacent opposite axial ends thereof;
c) introducing two rows of balls (12) between the finished outer race ring (10) and the unfinished inner race ring (11);
d) providing two rotatable forming members (15, 16) inserted at opposite axial ends of the unfinished inner race ring (11);
e) preventing rotation of the outer race ring (10) below an adjustable but predetermined torque;
f) rotating the unfinished inner race ring (11) and forming members (15, 16) to effect rolling the rows of balls (12) constantly about the circumferential periphery of the inner race ring (11);
g) bending the unfinished inner ring (11) outwardly of the two rows of balls (12) by rotatable forming members (15, 16) to shape the unfinished inner raceways to a final finished form, until the balls (12) are permanently encapsulated in two rows forming a bearing free from play, whereby the finished outer race ring (10) is caused to start to rotate, together with the inner race ring (11); and
h) using the start of rotation of the outer race ring (10) as an indication that the formation of the bearing is completed.

2. A method as claimed in claim 1,
**characterized in**,
using forming members (15, 16) in form of mandrels, at least one of which having an end portion (15a) with a diameter corresponding to the internal diameter of the inner race ring (11), and
using said one end portion (15a) for concentrically aligning the inner race ring (11) in the outer race ring (10) during assembly.

## Patentansprüche

1. Verfahren zur Herstellung eines doppelreihigen Schrägkugellagers mit einem äußeren Laufring (10), einem inneren Laufring (11) und einer Anzahl Kugeln (12), die in zwei axial versetzten Reihen zwischen den aus rohrförmigen Blechteilen hergestellten äußeren und inneren Laufringen angeordnet sind, mit folgenden Verfahrensschritten:
a) Bereitstellen eines ersten rohrförmigen Blechteils zur Bildung eines fertigen äußeren Laufrings (10) mit einem Paar axial versetzter, äußerer Laufbahnen, die in der Innenfläche des Teils in der Nähe seiner gegenüberliegenden axialen Enden ausgebildet sind;
b) Bereitstellen eines zweiten rohrförmigen Blechteils konzentrisch fluchtend mit dem äußeren Laufring (10) zur Bildung eines drehbaren, unfertigen inneren Laufrings (11) mit einem Paar axial versetzter, unfertiger innerer Laufbahnen, die in der äußeren Mantelfläche nahe den gegenüberliegenden, axialen Enden des Blechteils ausgebildet sind;
c) Einführen von zwei Reihen Kugeln (12) zwischen den fertigen äußeren Laufring (10) und den unfertigen inneren Laufring (11);
d) Bereitstellen von zwei drehbaren Formelementen (15, 16), die in die gegenüberliegenden axialen Enden des unfertigen inneren Laufrings (11) eingeführt werden;
e) Verhindern einer Rotation des äußeren Laufrings (10) unterhalb eines einstellbaren, aber vorbestimmten Drehmoments;
f) Drehen des unfertigen inneren Laufrings (11) und der Formelemente (15, 16), um ein kontinuierliches Rollen der Reihen von Kugeln (12) um die Umfangsfläche des inneren Laufrings (11) zu bewirken;
g) Biegen des unfertigen inneren Rings (11) durch die drehbaren Formelemente (15, 16) nach außen über die beiden Reihen von Kugeln (12), um die unfertigen inneren Laufbahnen in eine fertige Form zu bringen, bis die Kugeln (12) dauerhaft in zwei Reihen eingekapselt sind und ein spielfreies Lager bilden, wodurch der fertige äußere Laufring beginnt, sich zusammen mit dem inneren Laufring (11) zu drehen;
h) Verwendung des Beginns der Drehung des äußeren Laufrings (10) als Anzeichen dafür, daß die Formgestaltung des Lagers abgeschlossen ist.

2. Verfahren nach Anspruch 1, **dadurch gekennzeichnet**, daß Formelemente (15, 16) in Form von Aufweitdornen verwendet werden, von denen wenigstens einer einen Endabschnitt (15a) mit einem dem inneren Durchmesser des inneren Laufrings (11) entsprechenden Durchmesser besitzt, und dieser Endabschnitt (15a) zum konzentrischen Ausrichten des inneren Laufrings (11) zum äußeren Laufring (10) während der Montage verwendet wird.

## Revendications

1. Procédé de fabrication d'un roulement à contact oblique et à deux rangées de billes comportant une bague extérieure (10) et une bague intérieure (11) ainsi que de nombreuses billes (12) disposées entre lesdites bagues intérieure et extérieure en deux rangées espacées axialement, lesdites bagues étant formées à partir de pièces à usiner tubulaires en tôles, ledit procédé comprenant les étapes consistant:
a) à disposer d'une première pièce à usiner tubulaire en tôle pour former une bague extérieure finie (10) comportant une paire de chemins de roulement extérieurs finis, espacés axialement et formés dans la surface intérieure de la pièce à usiner de façon adjacente à ses extrémités axiales opposées;
b) à disposer d'une seconde pièce à usiner tubulaire en tôle, alignée concentriquement avec la bague extérieure (10), pour former une bague intérieure non finie (11) pouvant tourner et comportant une paire de chemins de roulement intérieurs non finis et espacés axialement, formés dans la surface latérale extérieure de cette bague, de façon adjacente à ses extrémités axiales opposées;
c) à introduire deux rangées de billes (12) entre la bague extérieure finie (10) et la bague intérieure non finie (11);
d) à disposer de deux éléments de formage (15, 16) pouvant tourner, que l'on insére dans les extrémités axiales opposées de la bague intérieure non finie (11);
e) à empêcher la rotation de la bague extérieure (10) en dessous d'un couple réglable mais prédéterminé;
f) à faire tourner la bague intérieure non finie (11) et les éléments de formage (15, 16) pour provoquer le roulage des rangées de billes (12) d'une façon constante autour de la périphérie circonférencielle de la bague intérieure (11);
g) à couder la bague intérieure non finie (11) à l'extérieur des deux rangées de billes (12) à l'aide des éléments de formage pouvant tourner (15, 16) afin de profiler à une forme finale les chemins de roulement intérieurs non finis, jusqu'à ce que les billes (12) se trouvent emprisonnées, d'une façon permanente, dans les deux rangées en formant un roulement exempt de jeu, ce qui fait que la bague extérieure finie (10) est amenée à commencer à tourner conjointement avec la bague intérieure (11); et
h) à utiliser le début de la rotation de la bague extérieure (10) comme une indication de l'achèvement de la formation du roulement.

2. Procédé selon la revendication 1, caractérisé en ce que l'on utilise des éléments de formage (15, 16) se présentant sous la forme de mandrins dont au moins l'un comporte une partie terminale (15a) ayant un diamètre correspondant au diamètre interne de la bague intérieure (11), et on utilise ladite partie terminale (15a) pour aligner de façon concentrique la bague intérieure (11) dans la bague extérieure (10) pendant l'assemblage.
